# EUROPEAN PATENT SPECIFICATION

(11) **EP 0 633 126 B1**
(45) Date of publication and mention of the grant of the patent: **09.12.1998**
(21) Application number: 92114974.6
(22) Date of filing: 02.09.1992
(51) Int. Cl.: B29C 57/10, B65D 59/00

(54) **Method of protecting a pipe end**
Verfahren zum Schützen eines Rohrendes
Méthode pour protecter le bout du tube

(30) Priority: 03.09.1991 FI 914152
(43) Date of publication of application: 11.01.1995
(73) Proprietor: Uponor B.V., 1102 BR Amsterdam (NL)
(72) Inventor: Laaksonen, Paavo, SF-15170 Lahti (FI)
(74) Representative: Baronetzky, Klaus, Dipl.-Ing.

(56) References cited:
- DE-A- 3 904 476
- US-A- 3 078 879
- US-A- 3 574 312
- US-A- 4 269 232
- US-A- 4 915 137

## Description

This invention relates to a method of protecting a pipe end.

It is known to protect pipe ends by means of end plugs passed over the pipe ends or pushed inside the pipes on delivery from the factory to the customer. Such plugs are usually made of polyethylene or foamed polystyrene. The purpose of the plugs is to keep the pipes clean up to the installation. This is especially important in pressure pipes to be connected to sensitive equipment and having high hygiene requirements.

A drawback of known plugs is that the plugs are separate and may be installed at the factory only after a long factory storage time, in addition to which they tend to come off when exposed to wind during transport. Moreover, the plugs are expensive and cannot be returned from the installation site for practical reasons.

US-A-3 078 879 which forms the basis for the preamble of Claim 1, refers to a closure which is suitable to avoid contamination. However, the closure known from this document does not allow an end surface protection such at is not suitable as a replacement for the above mentioned plugs.

The object of the present invention is to provide a method by means of which pipes can be protected easily and advantageously.

The method according to the invention is characterized by the features given in claim 1. Other preferred embodiments of the invention are characterized by what is disclosed in the accompanying claims.

In the following the invention will be described by means of an example with reference to the attached drawings, in which
Figure 1 shows a pipe end provided with a protective film by the method according to the invention;
Figure 2 shows a protective film web; and
Figure 3 shows one practical application of the method of forming and sealing a protective film according to the invention.

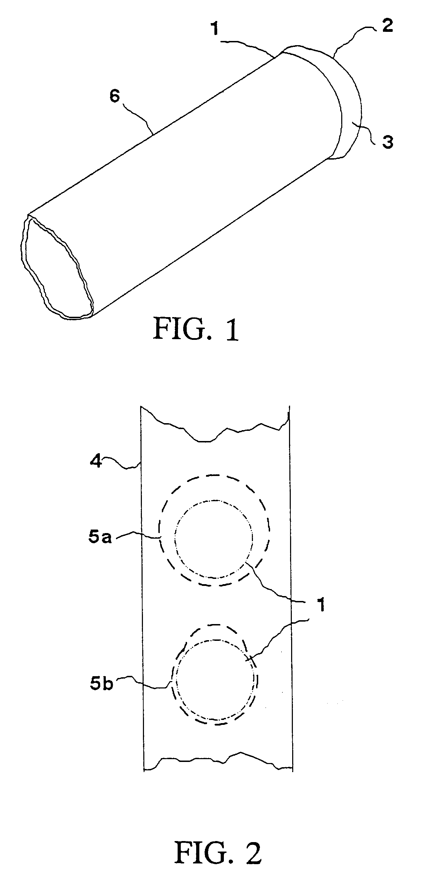

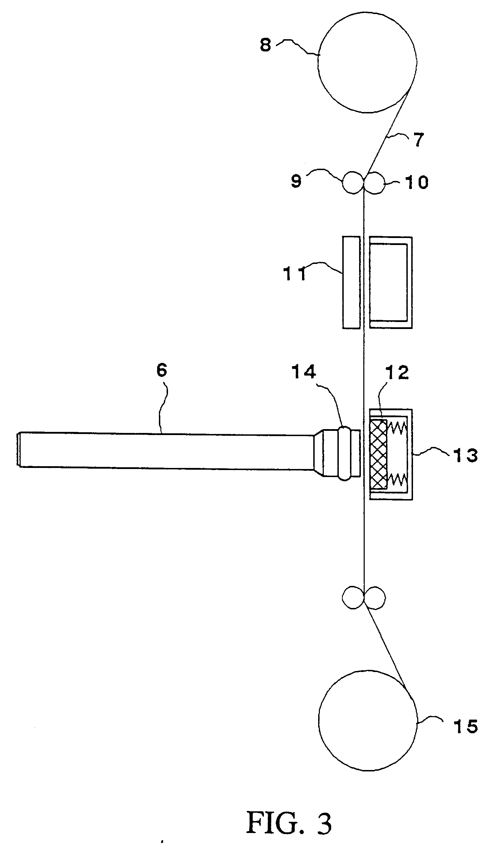

As shown in Figure 1, an end 1 of a pipe 6 is provided with a protective film 2 in accordance with the invention. The film 2 is heat sealed to the end surface of the pipe in such a way that it can be torn off before the installation of the pipe in a pipeline. As used in this connection, *the end surface of the pipe 6* refers to the cutting surface of the pipe end 1, which is in a plane perpendicular to the longitudinal axis of the pipe. The end surface may also be the end surface of a socket formed in the pipe end or a piece attached to the pipe, as shown in Figure 3.

In place of inductive heat sealing, it is possible to use e.g. ultrasonic welding. To facilitate tearing, the film comprises a free edge 3 which can be gripped to tear off the film. The provision of a seal which withstands storage and transport but can nevertheless be torn off by gripping the film by hand is obvious to one skilled in the art (cf. e.g. the sealing of the aluminium covers of packages containing certain milk products).

The protective film is preferably formed from a film web 4, as shown in Figure 2, whereby a pattern corresponding to the shape of the pipe end is perforated in the film web so as to be detached from the web in connection with the heat sealing. A round film 5a larger than the pipe end 1 can be positioned eccentrically to form a tearing edge, whereas a smaller film 5b is so shaped that a free edge 3 for tearing off the film is formed automatically.

The protective film is preferably formed from a laminate web comprising at least one firm layer preventing the film from splitting when being torn off, and at least one layer which can be sealed or welded to the pipe material. The laminate may be a plastic/plastic, plastic/cardboard, plastic/paper or e.g. plastic/aluminium laminate, possibly reinforced with fibre. Essential is that the protective film is made so strong that it is detached in one piece from the end surface of the pipe when torn off. Advantageously, instructions of use etc. can be printed on the outer surface of the protective film to facilitate the installation of the pipe. In addition, the basic colour of the protective film can be easily dyed e.g. in accordance with the use of the pipe, its nominal diameter or pressure classification.

To obtain optimal protection, it is preferable to seal the film covering the pipe end to the end surface of the pipe before the pipe leaves the production line.

In the following, one specific practical application of the method of protecting a pipe end according to the invention will be described with reference to Figure 3.

A laminated film web 7 having a width proportional to the diameter of the pipe 6 to be protected is drawn from a film reel 8 by means of tension rolls 9 and 10. Figure 3 shows by way of example that the method according to the invention can be applied to a piece or socket 14 preinstalled in the pipe 6 instead of the end surface of the pipe itself. Protective films of desired size and shape for the pipe ends are perforated in the film web 7 by means of a tool 11 (cf. Figure 2). After perforation the web is passed onwards and the perforated area is aligned with the pipe end. A heat plate 12 and/or the pipe 6 move towards each other and are pressed against each other, and so the film laminate 7 positioned between them is welded to the end surface of the pipe by the action of heat and pressure. The sealing typically takes 1 to 2 seconds. Simultaneously a detaching ring 13 removes the perforated area from the film laminate web. Waste web is wound onto a waste reel 15 to be subsequently recycled.

Pipes are usually sealed at both ends. This can, of course, be performed by means of apparatuses provided at both ends of the pipe. Alternatively, one sealing apparatus is used, whereby the pipe is turned 180°. In this case, it is possible to provide a perforating device to form protective films for pipe ends of different diameters.

It is obvious to one skilled in the art that the different embodiments of the invention are not restricted to the above examples, but they may vary within the scope of the accompanying claims.

## Claims

1. Method of protecting a pipe end, wherein a film (2; 5a; 5b) covering the pipe end is attached to the end surface of the pipe (6) by welding or other similar heat sealing method, characterized in that the film (2; 5a; 5b) covering the pipe end is formed from a laminate comprising at least one film layer preventing the splitting of the film when being torn off, and at least one layer sealable or weldable to the pipe material.

2. Method according to claim 1, characterized in that the film covering the end of the pipe (6) is formed from a film web (4; 7) in which a pattern (5a; 5b) corresponding to the shape of the pipe end is perforated, which pattern is detached from the film web in connection with the sealing.

3. Method according to claim 1 or 2, characterized in that the film (2; 5a; 5b) is positioned eccentrically or is so shaped relative to the pipe end (1) that a free edge (3) remains after sealing, by which edge the film can be torn off.

4. Method according to any of claims 1 to 3, characterized in that the sealing is carried out in such a way that the film (2; 5a; 5b) is easily detachable when installing the pipe.

5. Method according to any of claims 1 to 4, characterized in that the film (2; 5a; 5b) covering the pipe end is sealed to the pipe before the pipe leaves the production line.

6. Method according to any of claims 1 to 5, characterized in that the film (2; 5a; 5b) is sealed to the end surface of a socket (14) or other similar connecting piece preinstalled to the pipe (6).

## Patentansprüche

1. Verfahren zum Schützen eines Rohrendes, wobei ein Film (2; 5a; 5b), der das Rohrende abdeckt, durch Schweißen oder ein ähnliches Heißsiegelverfahren an der Endoberfläche des Rohrs (6) angebracht wird, dadurch **gekennzeichnet**, daß der Film (2; 5a; 5b), der das Rohrende abdeckt, aus einem Laminat ausgebildet ist, das mindestens eine Filmschicht, die die Trennung des Films beim Abreißen verhindert, und mindestens eine Schicht aufweist, die an das Rohrmaterial abdichtend angebracht oder angeschweißt werden kann.

2. Verfahren nach Anspruch 1, dadurch gekennzeichnet, daß der Film, der das Ende des Rohrs (6) abdeckt, aus einer Filmbahn (4; 7) ausgebildet wird, in die ein Muster (5a; 5b) perforiert ist, das der Form des Rohrendes entspricht, welches Muster in Verbindung mit der abdichtenden Anbringung aus der Filmbahn gelöst wird.

3. Verfahren nach Anspruch 1 oder 2, dadurch gekennzeichnet, daß der Film (2; 5a; 5b) exzentrisch angeordnet oder relativ zum Rohrende (1) so geformt wird, daß nach der abdichtenden Anbringung eine freie Kante (3) bleibt, durch welche Kante der Film abgerissen werden kann.

4. Verfahren nach einem der Ansprüche 1 bis 3, dadurch gekennzeichnet, daß die abdichtende Anbringung so ausgeführt wird, daß der Film (2; 5a; 5b) bei der Anbringung des Rohres leicht abgelöst werden kann.

5. Verfahren nach einem der Ansprüche 1 bis 4, dadurch gekennzeichnet, daß der Film (2; 5a; 5b), der das Rohrende abdeckt, abdichtend an das Rohr angebracht wird, bevor das Rohr die Fertigungsstraße verläßt.

6. Verfahren nach einem der Ansprüche 1 bis 5, dadurch gekennzeichnet, daß der Film (2; 5a; 5b) abdichtend an die Endoberfläche einer Muffe (14) oder eines ähnlichen Verbindungsstucks angebracht wird, die/das vorher am Rohr (6) angebracht wird.

## Revendications

1. Procédé de protection d'une extrémité de tube, dans lequel un film (2 ; 5a ; 5b) recouvrant l'extrémité du tube est fixé à la surface d'extrémité du tube (6) par soudage ou par un autre procédé analogue de scellement thermique, caractérisé en ce que le film (2 ; 5a ; 5b) recouvrant l'extrémité du tube est formé d'un stratifié qui comprend au moins une couche de film empêchant la déchirure du film lorsqu'il est arraché, et au moins une couche qui peut être soudée ou scellée sur le matériau du tube.

2. Procédé selon la revendication 1, caractérisé en ce que le film qui recouvre l'extrémité du tube (6) est formé d'une feuille continue (4 ; 7) dans laquelle un dessin (5a ; 5b) correspondant à la forme d'extrémité du tube est perforé, ce dessin étant séparé de la feuille continue lors du scellement.

3. Procédé selon la revendication 1 ou 2, caractérisé en ce que le film (2 ; 5a ; 5b) est disposé excentriquement ou a une forme telle, par rapport à l'extrémité du tube (1), qu'un bord libre (3) reste après scellement si bien que le film peut être arraché par ce bord.

4. Procédé selon l'une quelconque des revendications 1 à 3, caractérisé en ce que le scellement est réalisé de manière que le film (2 ; 5a ; 5b) puisse être facilement séparé lors de l'installation du tube.

5. Procédé selon l'une quelconque des revendications 1 à 4, caractérisé en ce que le film (2 ; 5a ; 5b) recouvrant l'extrémité du tube est soudé sur le tube avant que le tube ne quitte la chaîne de fabrication.

6. Procédé selon l'une quelconque des revendications 1 à 5, caractérisé en ce que le film (2 ; 5a ; 5b) est soudé à la surface d'extrémité d'un raccord femelle (14) ou d'une autre pièce analogue de raccordement préalablement montée sur le tube (6).
